# EUROPÄISCHE PATENTANMELDUNG

(11) **EP 0 911 281 A1**
(43) Veröffentlichungstag der Anmeldung: **28.04.1999**
(21) Anmeldenummer: 98119967.2
(22) Anmeldetag: 22.10.1998
(51) Int. Cl.: B65G 47/76

(54) **Vorrichtung zum Ausschleusen von auf einem Transportband geförderten Stückgütern**

(30) Priorität: 24.10.1997 DE 19746967
(71) Anmelder: Espera Werke GmbH, 47058 Duisburg (DE)
(72) Erfinder: Korthäuser, Manfred, 45479 Mühlheim (DE)
(74) Vertreter: Cohausz & Florack

(57) **Zusammenfassung**

Die Erfindung betrifft eine Vorrichtung zum Ausschleusen von auf einem Transportband (9) geförderten Stückgütern, insbesondere Packungen, mit einem aus der Transportrichtung in Ausschleusungsrichtung seitlich verschwenkbaren und an einer ortsfesten Haltevorrichtung (6) befestigten Führungsarm (7), welcher von einem gelenkig mit dem Führungsarm (7) verbundenen, insbesondere pneumatischen, Antrieb (3) betätigt wird. Um zum einen einen wartungs- und verschleißfreien Betrieb sowie zum anderen einen geräuscharmen und das Stückgut schonenden Betrieb zu ermöglichen, ist vorgesehen, daß der Führungsarm (7) in Bezug auf die Haltevorrichtung (6) elastisch gelagert ist.

## Beschreibung

Die Erfindung betrifft eine Vorrichtung zum Ausschleusen von auf einem Transportband geförderten Stückgütern, insbesondere Packungen, mit einem aus der Transportrichtung in Ausschleusungsrichtung seitlich verschwenkbaren und an einer ortsfesten Haltevorrichtung befestigten Führungsarm, welcher von einem gelenkig mit dem Führungsarm verbundenen, insbesondere pneumatischen, Antrieb betätigt wird.

Eine solche Vorrichtung ist aus der Praxis bekannt. Sie dient beispielsweise zum Ausschleusen von einzelnen zu etikettierenden oder zu wiegenden Packungen aus einer Reihe von auf dem Transportband geförderten einzelnen Packungen. Zum Ausschleusen der entsprechenden Packungen an den verschiedenen Stellen im Laufe des Transportprozesses werden die Packungen quer zur Laufrichtung des Transportbandes von diesem heruntergeschoben und gelangen in einen weiteren Sortierabschnitt. Hierdurch gelingt es, Packungen nach Gewicht oder Größe zu sortieren oder aber eine Chargentrennung vorzunehmen. Die bekannte Vorrichtung verwendet zur Ausschleusung Pneumatikzylinder oder elektromotorisch getriebene Hebel zur Betätigung des Führungsarmes zum Zwecke des Quertransportes der Packungen. Dabei sind Führungsarm und Antrieb über Scharniere bzw. Gelenke miteinander verbunden. Diese Art der Verbindung ist einerseits wartungs- und verschleißanfällig und zum anderen erfolgt bei der Betätigung eine Lärmentwicklung. Darüber hinaus kann durch die Ruckartigkeit der Bewegung des Führungsarmes empfindliches Stückgut beschädigt werden.

Der Erfindung liegt davon ausgehend die Aufgabe zugrunde, eine Vorrichtung der eingangs genannten Art dahingehend weiterzuentwickeln, daß sie einerseits wartungs- und verschleißfrei wird und zum anderen ein geräuscharmer und das Stückgut schonender Betrieb ermöglicht wird.

Diese Aufgabe wird erfindungsgemäß dadurch gelöst, daß der Führungsarm in Bezug auf die Haltevorrichtung elastisch gelagert ist.

Die Erfindung zeichnet sich dadurch aus, daß die Verbindung zwischen Führungsarm und Haltevorrichtung elastisch, d.h. nachgiebig gestaltet ist, wodurch zum einen der Wartungsaufwand erheblich herabgesetzt wird und zum anderen ein nahezu verschleißfreier Betrieb realisiert wird.

Darüber hinaus ergibt sich eine geräuscharme Funktion, da kein Spiel in den Verbindungsstellen, insbesondere den Gelenken, auftritt. Auch werden die Packungen wesentlich schonender behandelt, da durch die Nachgiebigkeit eine Dämpfungswirkung eintritt.

Schließlich ist durch die Verringerung der Zahl der Einzelkomponenten der konstruktive Aufwand geringer.

Nach einer bevorzugten Ausführungsform der Erfindung werden außerdem zur Verbindung von Antrieb und Führungsarm flexible Gelenkelemente verwendet, so daß sich für diese Verbindung die gleichen Vorteile ergeben wie für die elastische Lagerung des Führungsarm in Bezug auf die Haltevorrichtung.

Weitere Vorteile der Erfindung ergeben sich aus den nachfolgenden Unteransprüchen.

Die Erfindung wird im folgenden anhand eines Ausführungsbeispieles näher erläutert.

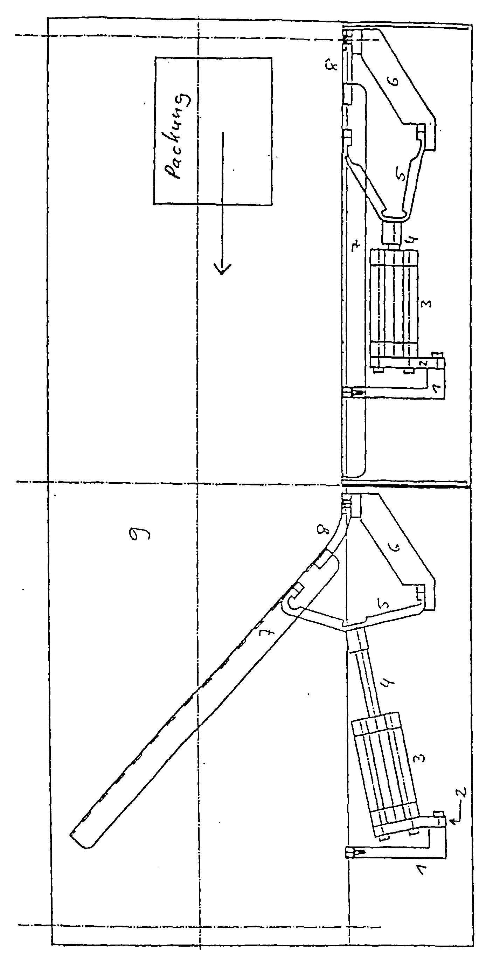

Die einzige Figur zeigt eine Draufsicht auf eine Vorrichtung zum Ausschleusen von auf einem Transportband 9 geförderten Packungen.

Gezeigt ist die Draufsicht auf eine solche Vorrichtung, wobei der rechte Teil der Figur den Normalbetrieb beim Transport der Packung in Transportrichtung (Pfeil) zeigt, während der linke Teil der Figur den Ausschleusungsbetrieb, erkennbar an der Schrägstellung des Führungsarmes 7, darstellt.

Seitlich des Transportbandes 9 ist eine gehäusefeste Lagerung 1 angeordnet, an welchem über ein flexibles Verbindungsmittel 2 ein Pneumatikzylinder 3 als Antriebsorgan befestigt ist. Die Kolbenstange 4 des Pneumatikzylinders 3 trägt ein Kniegelenk 5, welches aus flexiblem Material gebildet ist. Die beiden Enden des Kniegelenkes 5 sind einerseits an einer weiteren als Lagerbock ausgeführten Haltevorrichtung 6, die gehäusefest ist, und an einem Führungsarm 7 befestigt. An den Knickstellen ist das Kniegelenk 5 dünner ausgeführt. Der Führungsarm 7 ist über ein flexibles Verbindungsmittel 8 mit einer gehäusefesten Haltevorrichtung 6 gekoppelt.

Der rechte Teil der Figur zeigt den Führungsarm 7 in seiner eingezogenen Position, in der er die Transportrichtung der Packung nicht beeinflußt.

Bei Betätigung des Pneumatikzylinders 3 bewegt sich die Kolbenstange 4 in die in der linken Hälfte der Figur dargestellten Position, wodurch das flexible Kniegelenk 5 gespreizt wird und den Führungsarm 7 nach außen drückt. Ein Teil der Seitwärtsbewegung des Führungsarmes 7 überträgt sich auf den Pneumatikzylinder 3, so daß er aufgrund seiner flexiblen Lagerung aus der Ruhestellung herausgeschwenkt wird.

Zwischen den beiden in der Zeichnung dargestellten Zuständen schaltet die Vorrichtung wahlweise um.

Dabei erfolgt ein geräuscharmer Betrieb, da kein Spiel in den gelenkigen Verbindungen auftritt. Vorteilhafterweise kann auch ein Dämpfungseffekt ausgenutzt werden, der bei der Berührung des Führungsarmes 7 mit der Packung infolge der elastischen Verbindung 8 des Führungsarmes 7 mit der Haltevorrichtung 6 eintritt.

## Patentansprüche

1. Vorrichtung zum Ausschleusen von auf einem Transportband (9) geförderten Stückgütern, insbesondere Packungen, mit einem aus der Transportrichtung in Ausschleusungsrichtung seitlich verschwenkbaren und an einer ortsfesten Haltevorrichtung (6) befestigten Führungsarm (7), welcher von einem gelenkig mit dem Führungsarm (7) verbundenen, insbesondere pneumatischen, Antrieb (3) betätigt wird,
**dadurch gekennzeichnet,** daß der Führungsarm (7) in Bezug auf die Haltevorrichtung (6) elastisch gelagert ist.

2. Vorrichtung nach Anspruch 1,
**dadurch gekennzeichnet,** daß Führungsarm (7) und Antrieb (3) elastisch miteinander gekoppelt sind.

3. Vorrichtung nach Anspruch 2,
**dadurch gekennzeichnet,** daß die elastische Kopplung durch ein flexibles Kniegelenk (5) gebildet ist.

4. Vorrichtung nach Anspruch 1, 2 oder 3,
**dadurch gekennzeichnet,** daß das flexible Kniegelenk (5) einerseits an der ortsfesten Haltevorrichtung (6) und andererseits am Führungsarm (7) befestigt und von einer Kolbenstange (4) des Antriebs (3) betätigbar ist.

5. Vorrichtung nach einem der vorhergehenden Ansprüche,
**dadurch gekennzeichnet,** daß der Antrieb (3) elastisch mit einer gehäusefesten Lagerung (1) verbunden ist.

6. Verwendung einer Vorrichtung nach einem der vorhergehenden Ansprüche zum Aussortieren von zu etikettierenden oder zu wiegenden Packungen.

7. Verwendung einer Vorrichtung nach einem der vorhergehenden Ansprüche zur Chargentrennung.
